# EUROPEAN PATENT SPECIFICATION

(11) **EP 0 337 321 B1**
(45) Date of publication and mention of the grant of the patent: **17.03.1993**
(21) Application number: 89106195.4
(22) Date of filing: 07.04.1989
(51) Int. Cl.: F16J 15/32

(54) **An improved sealing assembly of the double screen type and rolling element bearing provided with such sealing assembly**
Dichtungsvorrichtung mit Doppelschutz und damit ausgestattetes Wälzlager
Dispositif de joint à double effet et palier à roulement équipé avec un tel dispositif

(30) Priority: 12.04.1988 IT 6733588
(43) Date of publication of application: 18.10.1989
(73) Proprietor: RIV-SKF OFFICINE DI VILLAR PEROSA S.p.A, I-10123 Torino (IT)
(72) Inventor: Colanzi, Franco, I-10100 Torino (IT); Vignotto, Angelo, I-10100 Torino (IT)
(74) Representative: Bongiovanni, Guido

(56) References cited:
- EP-A- 0 007 832
- EP-A- 0 116 721
- EP-A- 0 137 144
- FR-A- 2 534 654
- GB-A- 2 192 436
- US-A- 4 669 895

## Description

The present invention relates to an improved sealing assembly of the double screen type, in which, respective deformable annular lips exert a sealing action between two screens of the assembly, both in an axial sense and in a radial sense. The invention further relates to a rolling element bearing provided with such a sealing assembly.

It is known (e.g. from GB-A-2 192 436) that rolling element bearings utilised for heavy duty, such as for example those mounted on the wheel hubs of road vehicles, are provided with sealing assemblies fitted between the rings for the purpose of isolating from the environment the space in which the rolling elements roll, both to prevent the escape of the lubricating grease and, above all, to prevent the ingress of external contaminants such as water, dust, mud, moisture which would in use cause rapid wear of the bearing itself. Sealing assemblies currently utilised are composed of two rigid screens, one of which is provided with a pair of projecting annular elastomeric lips cooperating, by sliding, a first with a flange portion of the other screen and a second with a sleeve portion thereof, in such a way that the first lip exerts an axial sealing action whilst, simultaneously, the second lip exerts a radial sealing action.

Sealing assemblies of the said type guarantee satisfactory results only if they are mounted between the rings of the bearing with extreme precision; in particular, in the presence of axial assembly errors between the two screens the axial seal can be reduced, with consequent possibility of the introduction of contaminants into the space between the two screens; this can produce, in use, rapid wear of the sealing lips, with consequent loss even of the radial seal, and penetration of contaminants into the bearing.

The object of the present invention is that of providing a sealing assembly of the known double screen type described above which, however, will be able to ensure an axial seal even in the presence of slight assembly errors between the two screens and which, more generally, will have a better overall sealing action than that provided by known sealing assemblies currently utilised on rolling element bearings.

The said object is achieved by the invention, which relates to a sealing assembly for introduction between two members in relative rotation, of the type comprising a first, substantially rigid, annular screen, comprising a sleeve portion adapted to be fixedly mounted coaxially for rotation with a first of the said members and a flange portion carried for rotation with the said sleeve portion and projecting radially therefrom, and a second annular screen adapted to be mounted coaxially of and facing the said first screen on a second of the said members, the said second screen comprising a substantially rigid annular reinforcement adapted to be anchored fixedly to the said second member, and an elastomeric sealing element fixedly carried by the said reinforcement and comprising at least one pair of resiliently deformable annular lips, both lips projecting from a root zone of said elastomeric sealing element, a first of which cooperates slidingly with the said flange portion of the first screen and a second of which cooperates slidingly with the said sleeve portion of the first screen, characterised by the fact that the said flange portion of the first screen is provided with a conical surface projecting from the distal end of the flange portion axially towards the said second screen and disposed coaxially with the said sleeve portion and tapering towards the said sleeve portion; and by the fact that the said first lip of the second screen cooperates directly with the said conical surface to exert on it an axial sealing action between the said screens.

For a better understanding of the invention there is now given a non-limitative description of an embodiment thereof, with reference to the attached drawing, in which:
Figure 1 illustrates a partial, sectioned side view of a rolling element bearing provided with a sealing assembly according to the invention; and
Figure 2 illustrates on an enlarged scale, and in radial section, the sealing assembly according to the invention.

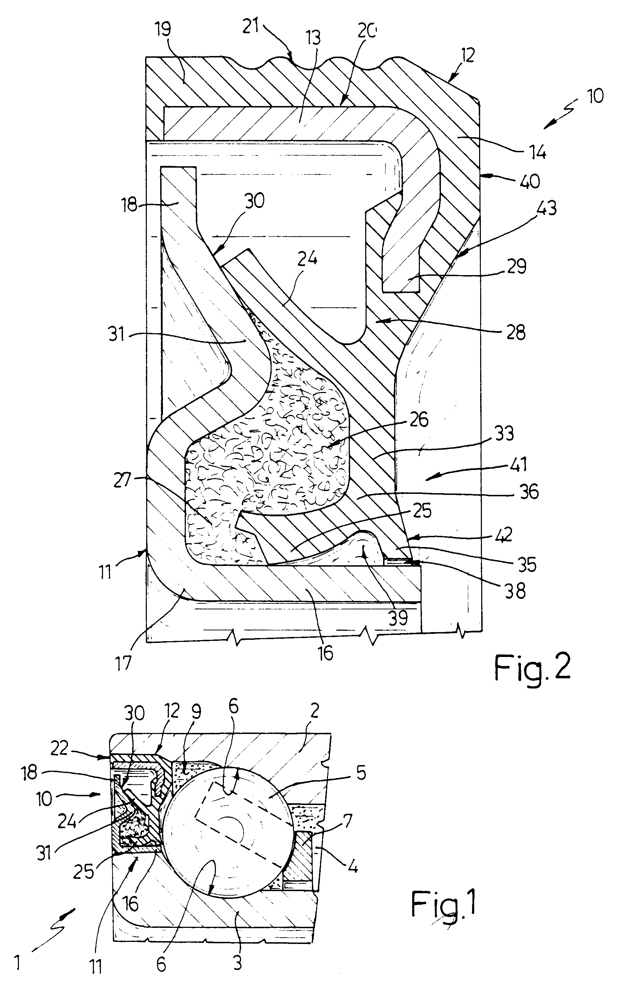

With reference to Figures 1 and 2, a rolling element bearing is generally indicated with the reference numeral 1 and comprises an outer ring 2, an inner ring 3 mounted coaxially within the ring 2 in such a way as to define with it an annular cavity 4, and a plurality of rolling bodies 5, for example balls, lodged in the cavity 4 and interposed freely between the rings 2 and 3, retained, on respective tracks 6 of these latter, on which the rolling bodies 5 are able to roll to render the rings 2 and 3 relatively rotatable with low friction, by an associated spacer cage 7; a sealing assembly 10 is also interposed between the rings 2 and 3 for protection and fluid-tight sealing closure of the cavity 4 which, as well as containing the balls 5 is filled with a lubricating grease 9; the bearing 1 is of known type, and is illustrated purely by way of example as a thrust bearing having two rings of balls and is therefore illustrated for simplicity only in part. The sealing assembly 10 (Figure 2) comprises a first, substantially rigid annular screen 11 preferably made in one piece from metal sheet, and a second annular screen 12 disposed coaxially of and facing the screen 11 and comprising a substantially rigid metal annular reinforcement 13 which is preferably L-shape in radial section, and an elastomeric annular sealing element 14 fixed, for example by vulcanisation, to and projecting from the reinforcement 13, which is partially clad thereby. The screen 11 has a sleeve portion 16 by means of which the screen 11 can be fixed coaxially onto the inner ring 3 for rotation therewith, and a flange portion 18, which projects radially from one end 17 of the sleeve 16 opposite the screen 12; the screen 12 can be fitted in use to the outer ring 2 by means of the reinforcement 13 and an anchorage portion 19 of the elastomeric element 14 which clads an outer cylindrical lateral surface 20 of the reinforcement 13 and which has an undulating outer surface 21 adapted to cooperate, in a known way, with a lodgement seat 22 of the bearing 1 to anchor the screen 12 for rotation with the outer ring 2 and, simultaneously, to seal the seat 22 in a fluid-tight manner on the outside.

The seal between the two facing coaxial annular screens 11 and 12 is ensured by a pair of resiliently deformable annular sealing lips 24 and 25 which project axially from the element 14 towards the screen 11 in directions diverging from one another, and which cooperate slidingly to form a fluid-tight seal one, the lip 24, with the flange portion 18 and the other, the lip 25, with the sleeve portion 16 of the screen 11, in such a way as to define between this and themselves a closed chamber 26 with a fluid-tight seal formed by the lips 24 and 25, and filled, according to the invention, with a lubricating grease, for example of a type similar to the grease 9 which fills the cavity 4 of the bearing 1. In particular, the lip 24 projects obliquely from a root zone 28 of the element 14 in which an inner edge 29 of the annular reinforcement 13 is embedded, in a direction such as to space it away from the axis of symmetry of the screen 12, and cooperate directly with a conical surface 30 of the flange portion 18 projecting axially from this towards the screen 12 and tapering towards it, in such a way as to exert an axial sealing action between the screens 11 and 12. The surface 30 is defined by a radially outer extrados side of a circumferential boss 31 formed in a radially intermediate position on the flange portion 18, which tapers towards the facing side of the screen 12, and having in radial section a substantially right angle triangular profile, of which the said extrados side defining the conical surface 30 constitutes the major cathetus.

According to the invention the lip 25, which extends axially from the screen 12 substantially parallel to the sleeve portion 16 with which it cooperates in such a way as to exert on it a radial sealing action, is connected to the elastomeric element 14, and in particular to the root zone 28 of the lip 24, by means of an annular, resiliently deformable connecting ring 33 integrally formed with the element 14, which projects radially from the root zone 28 and has a radial extent of substantially the same order of magnitude as the length of the lips 24 and 25 in such a way as to render these independent of one another. In fact, possible relative displacements of one of the two lips 24 and 25, before having any affect on the position of the other lip, causes deformation of the closest portion of the ring 33; this deformation, thanks to the relative width of the ring 33 itself, is however integrally absorbed thereby, which substantially functions, thanks to its deformability, as a hinge interposed between the two lips 24 and 25 consequently leaving these free to move independently of one another even though they are both fixed to the screen 12 at a common point namely the root zone 28.

Preferably, according to the invention, the elastomeric element 14 also includes a third annular lip 35 projecting obliquely from the screen 12 in a radial direction from the side opposite the lip 25 from a common root region 36 therewith defined by the innermost radial portion of the annular ring 33; the lip 35 cooperates, without sliding, with the sleeve portion 16 with which it defines a radial clearance 38 of predetermined magnitude, and delimits between the screens 11 and 12, together with the portion 16 and the lip 25, a second empty chamber 39 which is sealed in a fluid tight manner against the chamber 26 to which it is immediately adjacent, and which is accessible from the opposite side of the screen 11 through the radial clearance 38. The elastomeric element 14 is finally provided on its face 40 opposite and parallel to the flange 18, with an annular concavity 41 peripherally delimited, at its radially inner part, by an outer flank 42 of the lip 35 and, on its radially outer part by a frustoconical flare 43.

The concavity 41 faces, in use (Figure 1) towards the rolling bodies 5 and the chamber 39 communicates, through the radial clearance 38, with the cavity 4 in which the balls 5 and the grease 9 are located; the form of the concavity 41 is such that this defines a discharge surface for the lubricant 9 acting to cause this to circulate within the cavity 4; in fact, by the effect of the centrifugal force due to the relative rotation between the rings 2 and 3, as well as the effect of the rotation of the balls 5, the lubricant 9 which, being heated by the heat produced by the rolling friction within the bearing 1, is rather fluid, is projected in use against the lip 35; this, thanks to its shape, on the one hand prevents the lubrication 9 from escaping from the cavity 4 (the clearance 38 in fact defines a labyrinth seal) and on the other hand causes its projection into the concavity 41 along which the lubricant 9 flows by the centrifugal force towards the flared edge 43 which throws it back into the cavity 4. Moreover, possible pressurised vapours produced from the lubricant within the cavity 4 can on the other hand escape therefrom through the clearance 38 and collect in the annular chamber 39, which is empty, where they are subjected to an expansion and collected without the risk of raising the lip 25 and reducing the radial seal.

From what is described the advantages connected with the invention will be evident; in the first place possible axial assembly errors between the two screens 11 and 12 do not produce a loss of axial seal, between the lip 24 and flange 18; in fact the lip 24 cooperates with interference with the conical surface 30 and therefore possible axial displacements of this latter with respect to the screen 12 are compensated by corresponding resilient radial displacements of the lip 24; in each case maintenance of the axial seal is guaranteed by displacements of a magnitude equal to the depth of the boss 31, which are greater than those which could be caused by inaccurate assembly. In the second place, thanks to the insertion between the lips 24 and 25 of a deformable element such as the ring 33, the sealing lips are independent of one another so that possible displacements of the lip 24 do not have any influence on the lip 25 which would risk reducing its sealing action. Finally, thanks to the presence of the third lip 35, the main sealing lips 24 and 25 can be shaped in such a way as to be both directed towards the outside of the cavity 4, that is towards the direction from which external contaminants will arrive, thus increasing the seal against these; the sealing action against escape of the lubricant 9 with the further possibility of evacuating lubricant vapours which form in the cavity 4, is on the other hand performed by the lip 35 which moreover does not increase the friction produced by the seal in that it does not touch the screen 11. Finally, the flange 18, being mounted for rotation with one element such as the inner ring 3, also performs the traditional function of the external contaminant centrifuge of known double screen sealing assemblies, and defines with the reinforcement 13 a labyrinth seal for contaminants of greater dimensions (stone chips and the like).

## Claims

1. A sealing assembly (10) for insertion between two relatively rotatable members (2,3), of the type comprising a first, substantially rigid, annular screen (11) comprising a sleeve portion (16) adapted to be mounted coaxially of and for rotation with a first of the said members, and a flange portion (18) projecting from the said sleeve portion, and a second annular screen (12) adapted to be mounted coaxially of and facing the said first screen on a second of the said members, the said second screen comprising a substantially rigid annular reinforcement (13) adapted to be anchored fixedly to the said second member, and an elastomeric sealing element (14) carried fixedly by the said reinforcements and including at least one pair of resiliently deformable annular lips (24,25), both lips projecting from a root zone (28) of said elastomeric sealing element, a first of which (24) cooperates slidingly with the said flange portion (18) of the first screen (11) and a second of which (25) cooperates slidingly with the said sleeve portion (16) of the first screen (11), characterised by the fact that the said flange portion (18) of the first screen (11) is provided with a conical surface (30) projecting from the distal end of the flange portion (18) axially towards the said second screen (12) and disposed coaxially with the said sleeve portion (16) and tapering towards the said sleeve portion; and by the fact that the said first lip (24) of the second screen (12) cooperates directly with the said conical surface (30) to exert on it an axial sealing action between the said screens.

2. A sealing assembly accordingly to Claim 1, characterised by the fact that the said conical sealing surface (30) cooperating with the said first lip (24) is defined by a radially outer extrados surface of a circumferential boss (31) formed in a radially intermediate position on the said flange portion (18), which tapers towards the facing side of the said second screen (12), the said boss having in radial section a substantially right angle triangle profile.

3. A sealing assembly according to Claim 1 or Claim 2, characterised by the fact that the said second lip (25) cooperates with the said sleeve portion (16) of the first screen (11) in such a way as to exert on it a radial sealing action, the said second lip (25) being connected to the said elastomeric sealing element (14) in correspondence with said root zone 28 of the said first lip (24) by means of an annular connecting ring (33) projecting radially from the said root zone (28) of the first lip (24), the said annular connecting ring (33) being resiliently deformable and having a radial extent of substantially the same order of magnitude as the length of the said lips (24,25) in such a way as to render these independent from one another.

4. A sealing assembly according to any preceding Claim, characterised by the fact that the said lips (24,25) project axially from the said second screen (12) towards the said first screen (11) in directions which diverge from one another, in such a way as to cooperate with the said two different portions of the first screen (11) and so as to define between them and this latter a first fluid-tight sealed chamber (26) thereof, the said chamber being filled with lubricating grease.

5. A sealing assembly according to any preceding Claim, characterised by the fact that the said elastomeric element (14) of the second screen (12) includes a third annular lip (35) extending obliquely and projecting in a radial direction from the side opposite the said second lip (25) projecting from a common root zone (36) of this latter, the said third lip (35) cooperating without sliding with the said sleeve portion (16) of the first screen (11) and defining between itself, this latter and the said second lip (25) a second empty chamber (39) which is closed in a fluid-tight manner against the said first chamber (26), and which is accessible from the side opposite the said first screen (11) through a radial clearance (38) defined between the said third lip (35) and the said sleeve portion (16) of the first screen (11).

6. A sealing assembly according to Claim 5, characterised by the fact that the said elastomeric element (14) is provided on its face opposite the said flange portion (18) of the first screen (11) with an annular concavity (41) delimited peripherally, on one side, by an outer flank (42) of the said third lip (35) and, on the opposite side by a frustoconical flare (43).

7. A sealed rolling element bearing (1) of the type comprising an outer ring (2) and an inner ring (3) mounted coaxially and concentrically in such a way as to define between them an annular cavity (4), a plurality of rolling elements (5) interposed between the said rings (2,3), housed in the said annular cavity (4), and at least one associated seal assembly (10) interposed between the said closure rings of the said cavity, characterised by the fact that the said cavity (4) is closed by a sealing assembly (10) according to Claim 6, the said concavity (41) of the elastomeric element (14) facing towards the said rolling elements (5) and the said second chamber (39) communicating, through the said radial clearance (38), with the said cavity (4) in which the lubricating grease is located.

## Patentansprüche

1. Dichtungsvorrichtung (10) zum Einsetzen zwischen zwei relativ zu einander drehbaren Gliedern (2, 3), mit einem ersten, im wesentlichen steifen, ringförmigen Abschirmteil (11), welches einen koaxial auf dem einen der beiden Glieder montierbaren und mit diesem drehbaren Nabenteil (16) und einen davon abstehenden Flanschteil (18) aufweist, und einem zweiten ringförmigen Abschirmteil (12), welches dem ersten Abschirmteil gegenüberliegend auf dem anderen Glied montierbar ist und einen an diesem festlegbaren, im wesentlichen steifen, ringförmigen Verstärkungsteil (13) und ein daran befestigtes, elastomeres Dichtungselement (14) aufweist, das wenigstens ein Paar elastisch nachgiebig verformbare, ringförmige Lippen (24, 25) hat, die beide von einem Wurzelbereich (28) des elastomeren Dichtungselements vorspringen und von denen die erste (24) gleitend mit dem Flanschteil (18) und die zweite gleitend mit dem Nabenteil (16) des ersten Abschirmteils (11) zusammenwirkt, **dadurch gekennzeichnet,** daß der Flanschteil (18) des ersten Abschirmteils (11) mit einer vom freien Ende des Flanschteils (18) axial zum zweiten Abschirmteil (12) hin vorspringenden, koaxial zum Nabenteil (16) angeordneten und zu diesem hin geneigten konischen Fläche (30) versehen ist und daß die erste Lippe (24) des zweiten Abschirmteils (12) unmittelbar mit der konischen Fläche (30) zusammenwirkt, um auf sie eine axiale Dichtwirkung zwischen den Abschirmteilen auszuüben.

2. Dichtungsvorrichtung nach Anspruch 1, **dadurch gekennzeichnet**, daß die konische Dichtungsfläche (30), welche mit der ersten Lippe (24) zusammenwirkt, durch die äußere Rückenfläche einer in mittlerer Lage auf dem Flanschteil (18) geformten Ringrippe (31) bestimmt ist, die sich zur gegenüberliegenden Seite des zweiten Abschirmteils (12) hin verjüngt, wobei die Ringrippe im radialen Querschnitt im wesentlichen das Profil eines rechteckigen Dreiecks hat.

3. Dichtungsvorrichtung nach Anspruch 1 oder 2, **dadurch gekennzeichnet,** daß die zweite Lippe (25) mit dem Nabenteil (16) des ersten Abschirmteils (11) in der Weise zusammenwirkt, daß sie auf diesen eine radiale Dichtwirkung ausübt, und als Teil des elastomeren Dichtungselements (14) mit dem Wurzelbereich (28) der ersten Lippe (24) über einen radial von diesem vorspringenden Verbindungsring (33) verbunden ist, der elastisch nachgiebig verformbar ist und eine radiale Ausdehnung von im wesentlichen derselben Größenordnung hat, wie die Länge der Lippen (24, 25), so daß er diese voneinander unabhängig macht.

4. Dichtungsvorrichtung nach einem der vorhergehenden Ansprüche, **dadurch gekennzeichnet,** daß die Lippen (24, 25) in unterschiedlichen Richtungen derart axial vom zweiten Abschirmteil (12) zum ersten Abschirmteil (11) hin vorspringen, daß sie mit dessen zwei verschiedenen Teilen zusammenwirken und zwischen sich und dem letzteren eine erste, fluiddichte Kammer (26) begrenzen, die mit Schmierfett gefüllt ist.

5. Dichtungsvorrichtung nach einem der vorhergehenden Ansprüche, **dadurch gekennzeichnet,** daß das elastomere Element (14) des zweiten Abschirmteils (12) eine dritte ringförmige Lippe (35) aufweist, die sich schräg erstreckt und auf der der zweiten Lippe (25) entgegengesetzten Seite von einem mit der letzteren gemeinsamen Wurzelbereich (36) radial vorspringt, wobei die dritte Lippe (35), ohne zu gleiten, mit dem Nabenteil (16) des ersten Abschirmteils (11) zusammenwirkt und zwischen sich, dem letzteren und der zweiten Lippe (25) eine zweite, leere Kammer (39) begrenzt, die fluiddicht gegen die erste Kammer (26) abgeschlossen und von der dem ersten Abschirmteil (11) gegenüberliegenden Seite aus durch einen von der dritten Lippe (35) und dem Nabenteil (16) des ersten Abschirmteils (11) begrenzten Spalt (38) zugänglich ist.

6. Dichtungsvorrichtung nach Anspruch 5, **dadurch gekennzeichnet,** daß das elastomere Element (14) auf der dem Flanschteil (18) des ersten Abschirmteils (11) entgegengesetzten Endfläche mit einer ringförmig umlaufenden Einbuchtung (41) versehen ist, die an ihren Umfängen auf der einen Seite durch eine äußere Flanke (42) der dritten Lippe (35) und auf der anderen Seite durch eine kegelstumpfförmige Schrägfläche (43) begrenzt ist.

7. Abgedichtetes Wälzlager (1) mit einem äußeren Ring (2) und einem inneren Ring (3), die derart koaxial und konzentrisch montiert sind, daß sie zwischen sich einen ringförmigen Raum (4) begrenzen, einer Vielzahl von zwischen den Ringen (2, 3) eingesetzten, in dem ringförmigen Raum (4) aufgenommenen Wälzkörpern (5) und wenigstens einer angepaßten, zwischen die den Raum umschließenden Ringe eingesetzten Dichtungsvorrichtung, **dadurch gekennzeichnet,** daß der Raum (4) durch eine Dichtungsvorrichtung (10) nach Anspruch 6 abgeschlossen ist, wobei die Einbuchtung (41) des elastomeren Elements (14) zu den Wälzkörpern (5) weist und die zweite Kammer (39) über den radialen Spalt (38) mit dem Raum (4), in welchem sich das Schmierfett befindet, in Verbindung steht.

## Revendications

1. Ensemble de joints (10) pour insérer entre deux éléments (2, 3) pouvant tourner l'un par rapport à l'autre, comportant un premier écran (11) annulaire, sensiblement rigide, composé d'une partie de manchon (16) propre à être monté coaxialement, et en vue d'une rotation, avec un premier desdits éléments, et une partie de collerette (18) qui dépasse de ladite partie de manchon, et un second écran (12) annulaire propre à être monté coaxialement, et en vis-à-vis dudit premier écran, sur le second desdits éléments, ledit second écran comportant un renfort (13) annulaire, sensiblement rigide, propre à être fixement ancré audit second élément, et un élément de joint (14) en élastomère porté fixement par ledit renfort et comportant au moins une paire de lèvres (24, 25) annulaires, élastiquement déformables, les deux lèvres faisant saillie d'une région de base (28) dudit élément de joint en élastomère, la première de ces deux lèvres (24) coopérant de façon glissante avec ladite partie de collerette (18) du premier écran (11), et la seconde de ces lèvres (25) coopérant de façon glissante avec ladite partie de manchon (16) du premier écran (11), **caractérisé** par le fait que ladite partie de collerette (18) du premier écran (11) est pourvue d'une surface conique (30) qui fait saillie axialement de l'extrémité distale de la partie de collerette (18) en direction dudit second écran (12) et est placée coaxialement avec ladite partie de manchon (16) en étant biaisée en direction de ladite partie de manchon, et par le fait que ladite première lèvre (24) du second écran (12) coopère directement avec ladite surface conique (30) pour exercer sur elle une action d'étanchéité axiale entre lesdits écrans.

2. Ensemble de joints selon la revendication 1, **caractérisé** par le fait que ladite surface conique d'étanchéité (30), qui coopère avec ladite première lèvre (24), est définie par une surface extrados radialement externe d'une protubérance (31) formée sur la circonférence en une position radialement intermédiaire sur ladite partie de collerette (18), qui est inclinée en direction du côté en vis-à-vis dudit second écran (12), ladite protubérance ayant, en section radiale, un profil triangulaire sensiblement à angle droit.

3. Ensemble de joints selon la revendication 1 ou 2, **caractérisé** par le fait que ladite seconde lèvre (25) coopère avec ladite partie de manchon (16) du premier écran (11) de façon à exercer sur elle une action radiale d'étanchéité, ladite seconde lèvre (25) étant reliée audit élément de joint (14) en élastomère en correspondance avec ladite région de base (28) de ladite première lèvre (24) au moyen d'une bague annulaire de liaison (33) qui fait radialement saillie de ladite région de base (28) de la première lèvre (24), ladite bague annulaire de liaison (33) étant élastiquement déformable et ayant une étendue radiale axiale sensiblement du même ordre de grandeur que la longueur desdites lèvres (24, 25), de façon à rendre celles-ci indépendantes l'une de l'autre.

4. Ensemble de joints suivant l'une quelconque des précédentes revendications, **caractérisé** par le fait que lesdites lèvres (24, 25) font axialement saillie dudit second écran (12) en direction dudit premier écran (11) dans des directions qui divergent l'une de l'autre, de façon à coopèrer avec lesdites deux parties différentes du premier écran (11) et de façon à définir entre elles et ce dernier une première chambre (26) étanche aux fluides, ladite chambre étant remplie de graisse lubrifiante.

5. Ensemble de joints selon l'une quelconque des précédentes revendications, **caractérisé** par le fait que ledit élément en élastomère (14) du second écran (12) comporte une troisième lèvre (35) annulaire s'étendant obliquement et faisant saillie dans la direction radiale du côté opposé à ladite seconde lèvre (25) qui fait saillie d'une région de base (36) commune de cette dernière, ladite troisième lèvre (35) coopérant sans glisser avec ladite partie de manchon (16) du premier écran (11) et définissant entre elle-même, ce dernier et ladite seconde lèvre (25) une deuxième chambre (39) vide qui est fermée de façon étanche au fluide contre ladite première chambre (26), et qui est accessible du côté opposé audit premier écran (11) par un espace libre radial (38) défini entre ladite troisième lèvre (35) et ladite partie de manchon (16) du premier écran (11).

6. Ensemble de joints selon la revendication 5, **caractérisé** par le fait que ledit élément en élastomère (14) est pourvu sur sa face opposée à ladite partie de collerette (18) du premier écran (11) d'une concavité annulaire (41) délimitée selon la périphérie, sur un côté par un flanc externe (42) de ladite troisième lèvre (35) et sur le côté opposé par une partie évasée conique (43).

7. Roulement (1) étanche du type composé d'une bague externe (2) et d'une bague interne (3) montées coaxialement et concentriquement de façon à définir entre elles une cavité (4) annulaire, une pluralité d'éléments roulants (5) interposés entre lesdites bagues (2, 3), logés dans ladite cavité (4) annulaire, et au moins un ensemble de joints (10) associés intercalés entre lesdites bagues enveloppes de ladite cavité, **caractérisé** par le fait que ladite cavité (4) est fermée par un ensemble de joints (10) selon la revendication 6, ladite concavité (41) de l'élément (14) en élastomère qui fait face vers lesdits éléments roulants (5), et ladite seconde chambre (39) communiquant, par ledit espace libre (38) radial, avec ladite cavité (4) dans laquelle se trouve la graisse lubrifiante.
